# EUROPEAN PATENT APPLICATION

(11) **EP 2 487 973 A1**
(43) Date of publication of application: **15.08.2012**
(21) Application number: 11290085.7
(22) Date of filing: 11.02.2011
(51) Int. Cl.: H04W 68/00

(54) **Notifying a user equipment UE, over a mobile network, of an UE application trigger request from a network application server**

(71) Applicant: Alcatel Lucent, 75007 Paris (FR)
(72) Inventor: Elloumi, Omar, 78141 Velizy (FR); Thiebaut, Laurent, 91620 Nozay (FR); Landais, Bruno, 22304 Lannion (FR)

(57) **Abstract**

In an embodiment, there is provided a method for notifying a User Equipment UE (or a group of UE), over a mobile network, of an UE Application trigger request from a Network Application Server, said method comprising:
- sending UE Application trigger request information using a control plane path from the Network Application Server to the UE (or to an UE of the group) via a subscriber database (such as the HLR/HSS) and a node controlling UE access to the mobile network (such as a SGSN/MME).

## Description

The present invention generally relates to mobile networks and systems and to the support of application services in such networks and systems.

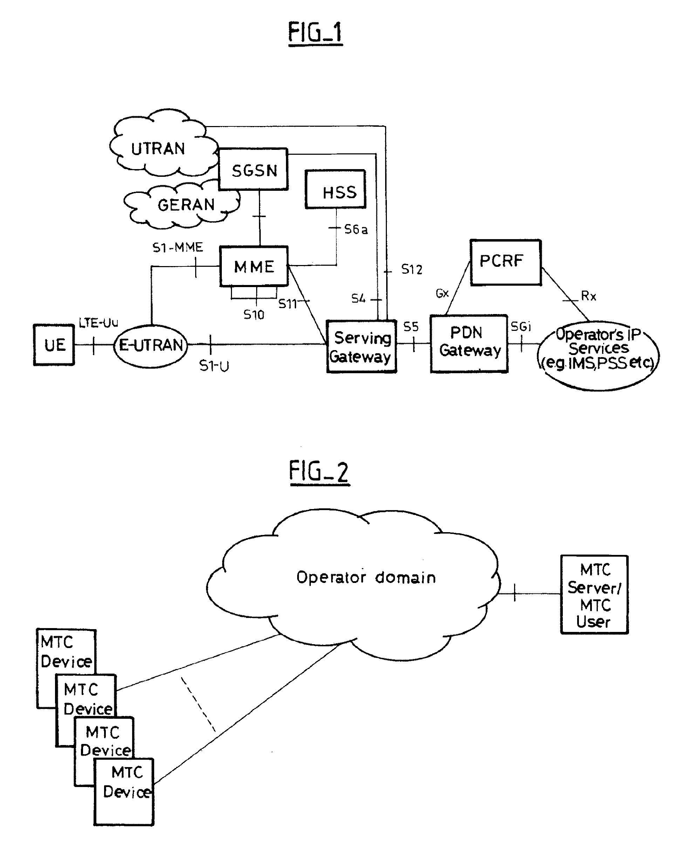

Descriptions of mobile networks and systems can be found in the literature, such as in particular in Technical Specifications published by standardization bodies such as for example 3GPP (3^{rd} Generation Partnership Project). In such systems, a terminal (also called User Equipment UE) has access to application services via a mobile network providing transport and communication services. Examples of mobile systems specified by 3GPP include 2G GPRS, 3G UMTS and LTE EPS (Evolved Packet System), such systems providing PS (Packet Switched) based communication services. EPS architecture is recalled in figure 1, taken from 3GPP TS 23.401. EPS comprises EPC (Evolved Packet Core) that may be accessed via E-UTRAN or via UTRAN/GERAN. EPC comprises entities such as MME (Mobility Management Entity), SGSN (Serving GPRS Support Node) supporting an S4 interface to a SGW and thus called S4-SGSN, SGW (Serving Gateway) and PGW (Packet Data Network PDN Gateway). GPRS/UMTS (not specifically illustrated) comprises GPRS/UMTS Packet Core which may be accessed via GERAN/UTRAN and which comprises entities such as SGSN supporting a Gn interface with a GGSN and thus called Gn-SGSN) and GGSN (Gateway GPRS Support Node).

Other examples of the description of mobile networks and systems can be found in Technical Specifications published by 3GPP2 (3^{rd} Generation Partnership Project2).

A new type of communication, called Machine-Type-Communication (MTC) or Machine-to-Machine M2M is currently being introduced in such networks and systems, as being currently specified by standardization bodies such as 3GPP. As illustrated for example in figure 2 taken from 3GPP TS 22.368, an UE equipped for Machine Type Communication, also called MTC Device, communicates through a mobile network (operator domain) with MTC Server(s) providing MTC application services. Network and system improvements are needed due to the specific nature of MTC. For example, there is a need, for MTC Devices that are not continuously attached to the network or that have no always-on PDP/PDN connection, to trigger these MTC Devices to contact the MTC server. There is also a need to provide remote MTC device configuration or management.

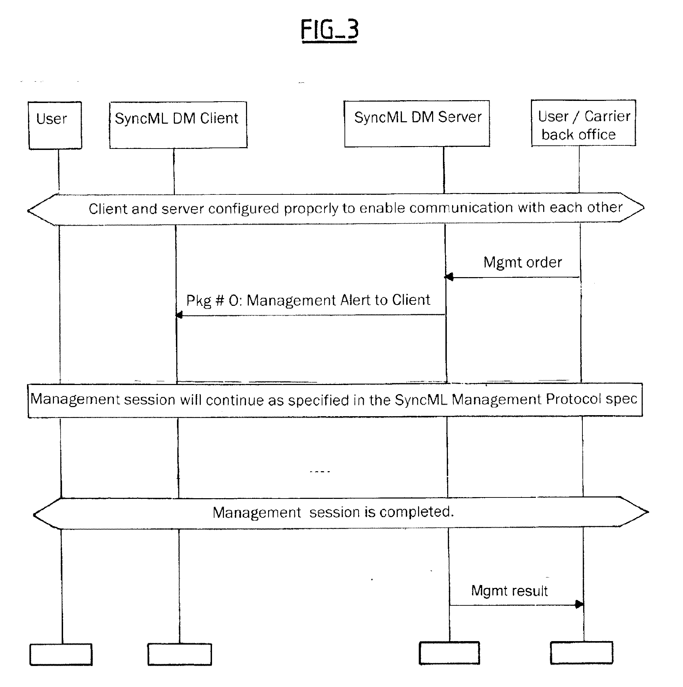

Device Management (DM) as specified by OMA (Open Mobile Alliance) is based on a client server architecture. A Notification Message is sent from a DM Server to a DM Client to cause the DM Client to initiate a connection back to the DM Server, as illustrated for example in figure 3 taken from "OMA Device Management Notification Initiated Session" Open Mobile Alliance, OMA-TS-DM_Notification-V1_3-20101207-C, where such Notification to DM Client is also noted "Package 0". This Notification Message is sent using a protocol called Push OTA (Over The Air) protocol, running on top of an associated transport protocol. Different variants have been specified by OMA for the Push OTA protocol and associated transport protocol. However, as recognized by the inventors and as will be explained later in more detail, none of these variants are satisfactory, particularly for data only (or PS only) terminals such as Machine-To-Machine (M2M) terminals or MTC devices.

Thus, there is a need to improve delivery of such information sent by a Network Application Server to an User Equipment, such as for example notification information sent by a DM Server to trigger a DM Client to initiate a communication with the DM Server, or trigger information sent by a MTC Server to a MTC Device to trigger the MTC Device to contact the MTC Server (such examples only being given for illustration purpose and other examples of course being possible). More generally there is a need to improve support of application services in mobile networks and systems, particularly for data-only terminals and/or Machine-To-Machine (M2M) terminals. Embodiments of the present invention in particular address such needs.

These and other objects are achieved, in one aspect, by a method for notifying a User Equipment UE (or a group of UE), over a mobile network, of an UE Application trigger request from a Network Application Server, said method comprising, in an embodiment:
- sending UE Application trigger request information using a control plane path from the Network Application Server to the UE (or to an UE of the group) via a subscriber database (such as the HLR/HSS) and a node controlling UE access to the mobile network (such as a SGSN/MME).

These and other objects are achieved, in other aspects, by entities for performing such method, said entities including, in particular: Network Application Server, subscriber database (such as the HLR/HSS), gateway between Network Application Server and mobile network, node controlling UE access to the mobile network (such as a SGSN/MME), , UE.

Some embodiments of apparatus and/or methods in accordance with embodiments of the present invention are now described, by way of example only, and with reference to the accompanying drawings, in which:
- Figure 1 is intended to illustrate EPS architecture,
- figure 2 is intended to illustrate introduction of MTC in mobile networks,
- Figure 3 is intended to illustrate the sending of a Notification message from DM Server to DM Client in OMA DM,
- Figure 4 is intended to illustrate notifying a User Equipment UE, over a mobile network, of an UE Application trigger request from a Network Application Server, according to embodiments of the present invention.

In cellular systems (such as 3GPP and 3GPP2 systems), device management is performed using OMA DM (Open Mobile Alliance Device Management) protocol, based on a client server architecture. In OMA DM, when the server needs to configure a particular device, it needs to trigger the device.

In one solution specified by OMA, the application server sends a specific SMS to the device (UE) which triggers:
- 1. The establishment of a data connection with the mobile access/core network to get IP connectivity. This phase may be skipped if the Device/UE benefits already from relevant IP connectivity to reach the DM server.
- 2. The establishment of a TCP/IP connection to the DM Server so that the Device Management session can take place i.e. so that the DM server can properly configure the device.

The use of SMS mandates that each device is assigned an MSISDN number, a resource that is used to identify a terminal as per ITU-T E.164 specification.

With the advent of M2M , national numbering plans for MSISDN number may quickly be exhausted. 3GPP is now considering the option where an M2M UE uses the PS (Packet Switched) domain only (i.e. an M2M UE does not access to CS domain services such as SMS and voice). If that is the case there is no need for assigning an MSISDN for an M2M Device (MTC Device). However this would need to operate OMA DM in another fashion: that is without the use of the SMS to trigger the UE to initiate a data bearer and establish a connection to the DM Server.

Furthermore for LTE terminals, usage of SMS requires the support of a CS domain subscription (as MME do not support SMS native delivery, MME can only relay a SMS service coming from a MSC over CS domain). Such need for CS domain subscription is costly for the operator (M2M devices are always-on attached to MSC just to be able to receive a few SMS per year).

The issue described here for M2M related devices may apply to other kind of devices such as USB dongles, for which such solution as SMS sending is only used for back-office operations (device configuration) and not for person to person communication service.
Several other solutions have been considered in OMA to replace the need for SMS, these include the use of SIP, UDP message sent to the device (UDP connection request), HTTP push. These methods need pre-conditions:
The method based on an UDP message sent to the device (UDP connection request) assume
   - 1. When it needs to the configure a device/UE, the OMA DM Server knows the IP address of such UE (in order to send a connection request over UDP to this device) . This can be achieved through the use of Radius accounting per 33GPP TS 29061 (section 16) where the GGSN or the P-Gateway informs the DM server each time a device acquires an IP address.
   - 2. (a) There is no FW (firewall) (or NAT- Network Address Translator) that blocks incoming UDP messages or (b) FW/NAT pinholes are permanently opened to allow Downlink traffic from the DM server to reach the UE or (c) a mechanism exists so as pinholes are dynamically configured each time a new connection is triggered by the OMA DM Server or (d) there is a periodic NAT/FW binding refresh sent by the UE towards the OMA DM server. (a) and (b) represent a security hole that security staff of the operator can't accept. (c) Requires a complex tie between the OMA DM server (in back-office) and the FW (in the production network). (d) means very frequent useless sending of NAT/FW binding refresh messages from the UE that both eat up the UE battery and the network (e.g. radio) resource.

The method based on a SIP message sent to the device assume that the M2M device supports a full sip stack (and may require a full IMS subscription) just for infrequent OMA DM device management procedures. This is believed to be too heavy for M2M which should correspond to as small/simple as possible devices and network subscriptions.

The method based on a HTTP push assumes that a HTTP/TCP session/connection is permanently opened between the M2M device and M2M server. With the potential explosion of the number of M2M devices, the scalability of this method is questionable. Furthermore when the device is roaming and served by a PGW/GGSN in the VPLMN in a LBO (Local Break Out) roaming deployment nothing guarantees that the IP @ allocated to the UE by the PGW/GGSN in the VPLMN belongs to a (public) @ range allowing to contact the DM server of the HPLMN without traversing a NAT. Requiring the NAT to keep permanently a NAT context for all devices that may one day possibly require a DM transaction is not scalable and leads to similar (NAT refresh) issues than those described for the UDP based solution.

Another alternative solution to solve the issue of shortage of MSISDN numbers could be that an SMS is sent to the IMSI. MSISDN(s) are user friendly numbers that have been used for CS domain services. For M2M, there is no need for the address used to send SMS to be user friendly. As such SMS could be sent to an IMSI number instead. However this solution does not remove the need to allocate a CS (Circuit Switched) context for each M2M terminal even if it uses data only services (*). M2M puts a strong pressure on ARPU (Average Revenue Per User), which tends to be 10 times less than the case of personal communication. If an M2M Devices will use PS domain services only, it is costly to maintain CS subscription just for the purpose of triggering the device via SMS for e.g. DM session.
(*) Actually for legacy 2G/3G radio, SMS may be sent over PS domain (via a SGSN), thus removing the need of a CS domain subscription for devices that only camp over such radio. Unfortunately there is no SMS capability in LTE and the SMS service over LTE relies on a SGs link between a MME and a MSC for the SMS delivery.

Embodiments of the present invention are based on a different approach, enabling in particular to avoid above-mentioned problems.

Embodiments of the present invention propose a solution allowing a network application to trigger a UE (or a group of UE) to initiate communication with the network application server based on a trigger indication from the application server, without the need for the network application server to send SIP push, HTTP push, UDP message or SMS. The solution works in particular for UEs with PS only subscription without MSISDN.

This approach may be used e.g. by an MTC Server or by a Device Management Server for remote device configuration.

In an embodiment, it is proposed to allow a network application (e.g. Device Management) to trigger an UE to establish a connection to the network application (e.g. Device Management) server without the need for the network application Server to send SIP push, HTTP push, UDP message or SMS.

When the network application server needs to initiate the contact with an UE it informs the HSS/HLR about this need ("UE application trigger request") and the UE is notified via signaling exchange through the MME/SGSN (MME/SGSN means MME or SGSN) that is serving it. Such UE application trigger request signaling through the MME or/and SGSN may occur only next time the UE initiates signaling to the MME or/and SGSN if there is no on-going signaling connection between the UE and MME/SGSN, or may take place immediately if there is an on-going signalling connection with the UE or if this is an urgent request. Upon reception of this (UE application trigger request) information, the UE (e.g. Device Management) application is triggered and contacts the network application (e.g. Device Management) server

As an example each time the Device Management server wants to configure (or change the SW of) a particular device/UE it informs the HSS/HLR about this need (UE application trigger request) and the UE is notified via signaling exchange through the MME or/and SGSN.

In an embodiment, following steps may be provided:
A network application server (e.g. Device Management Server) that needs to trigger a connection request from a UE informs the HSS/HLR about this need by providing "UE application trigger request" information containing:
   - the identity of the target UE; This identity may refer to a collection of UE.
   - the identity of the application;
   - a request counter associated to this request allowing to detect duplicated requests, to correlate requests with their acknowledgement and to allow the application to cancel a request;
   - optionally the IP@ (or FQDN) and/or TCP(or UDP) port of the application server that the UE has to contact;
   - optionally an urgency request indication.
   - optionally application specific information.

Each of the UE targeted by the network application server request is then notified about that request via signalling exchange through the serving MME/SGSN, during the next NAS signalling exchange with the UE if there is no on-going signalling connection between the UE and MME/SGSN, or immediately if there is an on-going signalling connection with the UE or if this is an urgent request.

Upon reception of this "UE application trigger request" information, the UE application is triggered and contacts the network application server.

Procedures that ensure reliable delivery of (signaling) messages between UE and network (MME/SGSN) over the radio and messages between the HSS/HLR and the MME/SGSN are used to make sure that message loss or network node failure do not involve a loss of the UE application trigger request.

In this scenario the firewall/NAT issue is solved because all signaling between the UE and the network application (e.g. DM) server is always initiated by the UE while there is no need to use SMS (and no need of CS subscription for the UE or MSISDN allocation to the UE)

A further benefit of this approach is that the (UE application trigger request) mechanism allows M2M devices not to have to listen to paging channels in order to be triggered for Device Management purpose: thus such UE may have VERY long DRX (Discontinuous Reception) periods and be very efficient in terms of battery consumption. If SMS would be used to carry such information, such UE would have to have the same kind of DRX period than regular devices, even though they would actually receive a page only a few times per year to update their SW or configuration.

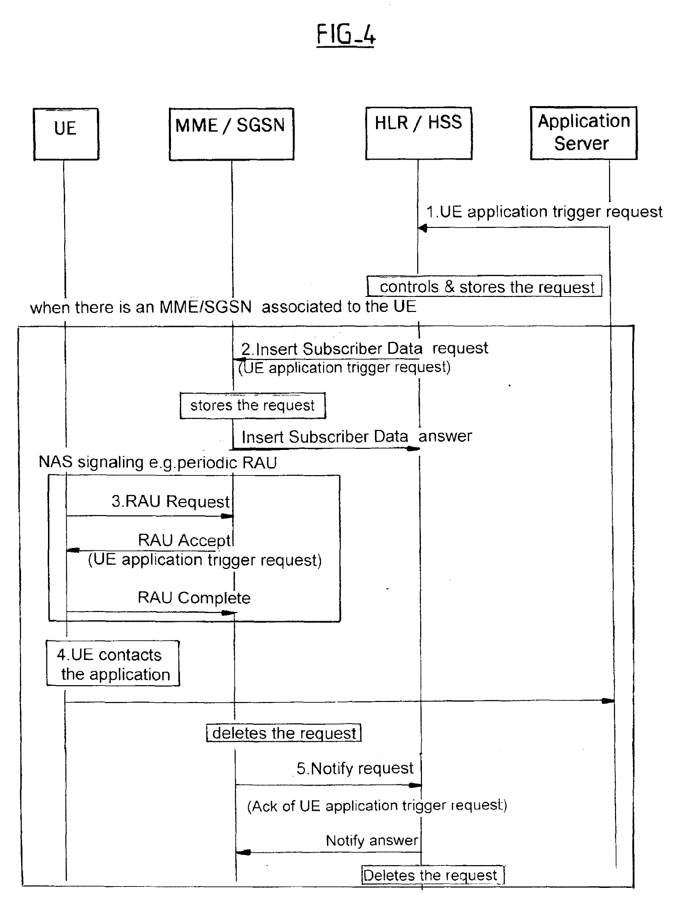

In an embodiment, the steps described above may be implemented as follows, as illustrated in figure 4, showing the case where the next contact between the MME/SGSN and the UE is for a Routing Area / Tracking Area update. The steps numbers below correspond also to the steps numbers in the figure.
1) Each time a network application server wants to contact a UE, it informs the HSS/HLR about this need by providing "UE application trigger request" information.
   The HSS/HLR (or a gateway between the application and the network):
   a) validates the request from the application (e.g. checking the application rights to issue such requests, enforcing application throttling , ...);
   b) translates the identity of the target UE received from the application into a network identity of the UE (e.g. corresponding to the IMSI of the target UE). This translation may mean mapping a target group identifier (e.g. all UE corresponding to an MTC group) received from the application into a list of individual UEs.
   c) stores this request in its database record associated with the target UE;
   d) determines the MME/SGSN that currently serves the target UE or waits for such a MME/SGSN to be allocated to the UE (i.e. waits for a subsequent Update Location from an MME/SGSN for that user).
2) The HSS/HLR notifies/updates the serving MME or/and SGSN with this "UE application trigger request" information, immediately if the UE is already served by a SGSN/MME, otherwise when the UE registers to the network.
   The "UE application trigger request" may be sent within the MAP (Gr) or Diameter (S6a/S6d) Insert Subscriber Data operation. The MME/SGSN stores this request in its database record associated with the UE and returns an Insert Subscriber Data answer.
3) The serving MME/SGSN transfers the "UE application trigger request" information to the UE upon the next NAS signalling exchange with the UE:
   a) RAU / TAU procedure:
      - the RAU/TAU Accept message may carry the "UE application trigger request" notification;
      - the TAU/RAU Complete message acknowledges the correct UE reception of the "UE application trigger request" notification. The UE has to send a TAU/RAU Complete message as if a new GUTI or a new P-TMSI had been assigned.
   b) Attach procedure:
      - the Attach Accept message may carry the "UE application trigger request" notification;
      - the Attach Complete message acknowledges the correct UE reception of the "UE application trigger request" notification. The UE has to send an Attach Complete message as if a new GUTI or a new P-TMSI had been assigned.
   c) a dedicated Notification procedure (with a UE acknowledgment) which takes place immediately if there is an on-going signalling connection with the UE when the MME/SGSN receives the request from the HSS/HLR.

   This may be implemented as follows:
   - for LTE access: the Network and UE initiated Generic transport of NAS messages procedures (see TS 24.301 subclauses 5.6.4.3 and 5.6.4.2) may be used to carry the "UE application trigger request" notification to the UE and its acknowledgment by the UE. I.e. using the DOWNLINK GENERIC NAS TRANSPORT message and the UPLINK GENERIC NAS TRANSPORT message with a Generic message container type IE set to a specific value for the transfer of "UE application trigger request" and with the Generic message container IE containing the "UE application trigger request" information.
   - For 2G/3G access, a similar mechanism may be defined or an existing GMM message may be extended to carry the UE application trigger request, e.g. GMM Information message (see 3GPP TS 24.008 subclause 9.4.19).
4) Upon reception of this "UE application trigger request" information, the UE
   a) acknowledges the reception of this information via NAS signalling to the MME/SGSN;
   b) checks that this is not a duplicate request (using the request counter). If this is a duplicate step 4) stops here. Otherwise, the UE application is triggered;
   c) establish the relevant PDN connection / PDP context using the existing EPC/GPRS procedures, if it is not already established;
   d) triggers the UE application which then contacts the network application server in the network. The addressing information to contact the application server in the network may be known in advance on the UE or may have been communicated in the "UE application trigger request" notification.
5) Upon receipt of the acknowledgement from the UE,
   a) the MME/SGSN removes the UE application trigger request information from its database record associated with the UE and notifies the HLR/HSS that the UE has received the "UE application trigger request" by sending a MAP/Diameter Notification message.
   b) When the HSS/HLR receives the acknowledgement from either the MME or the SGSN about a UE, the HSS/HLR removes this request in its database record associated with this UE.
      The HSS/HLR does not need to wait for the acknowledgement from both MME and SGSN to remove the request. This means that an UE may receive twice (once via MME, once via SGSN) such a notification. If so, the UE can detect a duplicated request via the request counter, discards the repeated request and returns a positive acknowledgement to the sending node. Another alternative would be for the HSS/HLR to remove an obsolete UE application trigger request from a MME/SGSN.
      This mechanism can also be extended to apply to a group of UEs. In that case the application request targets a group of UE and not an individual UE.
      An application may cancel an UE application trigger request using its application Id and the request counter.

   If an MME/SGSN fails and loses the information about not yet transferred "UE application trigger request" notifications, this is not an issue as the HSS/HLR sends to an MME/SGSN that starts serving an UE all "UE application trigger request" notification information it has in its database record associated with this UE.

An urgency request parameter may also be associated with the "UE application trigger request" notification. If the request is urgent, the UE is notified as soon as possible i.e. the serving MME/SGSN pages the UE as soon as it receives the "UE application trigger request" information from the HSS/HLR. Otherwise the UE is notified only the next time it exchanges signalling with the MME/SGSN. As an example a request for a regular new SW version download or for M2M is non urgent. A request associated with a call from an end-user to a customer care help desk is urgent and requires the MME/SGSN to page the UE.

### Remarks on various points:

■ At inter SGSN and or inter MME or SGSN-MME mobility, if the source MME/SGSN had not been able to pass the (UE application trigger request) notification to the UE, then the (UE application trigger request) notification information is removed in the source node and received by target node from the HSS/HLR as part of the mobility procedure.
■ For Step 3) above, the procedure for the urgent case is as follows
   The MME/SGSN pages the Mobile as soon as it receives the (UE application trigger request) notification information from the HSS/HLR.

In an embodiment, existing nodes or functionalities may be impacted as follows:
HLR/HSS stores UE application trigger requests, transfer them to serving MME/SGSN and erase them upon getting the acknowledgement that they have been successfully delivered to the UEs.
MME/S4-SGSN stores UE application trigger requests, transfers them via NAS signalling to the UE and erase them upon getting the acknowledgement that they have been successfully delivered to the UEs.

UEs receive and acknowledge UE application trigger requests via NAS signalling and trigger the corresponding application.

Even though it would be theoretically possible to pass the (UE application trigger request) notification via the CS domain, this is not the intention as the (UE application trigger request) notification is meant for terminals that do not have access to the CS domain.

This (UE application trigger request) notification procedure is to be reserved to well-behaving applications controlled by the operator in order to avoid overflow of the HSS/HLR and MME/SGSN by spamming.

Embodiments of the present invention propose following approach for triggering an UE application from a network application server, for sending the trigger information from the application to the UE:
■ instead of using SMS that requires the allocation of a MSISDN to the UE
■ instead of user plane techniques (UDP, HTTP push) that require long lived NAT/FW binding
■ instead of using IMS/Sip that are considered as too heavy for M2M
   it is proposed to use a control path from the application to the UE via the HSS/HLR and the MME/SGSN.

The fact that (UE application trigger request) notification procedure uses the HSS/HLR does not put more burden to the operator DataBase and EPC nodes than the usage of SMS for the same purpose:
■ when SMS is being used, the SMS-SC (SMS Service Center) contacts the HSS/HLR to get the identity of the MSC/SGSN that serves the user and then forwards the SMS over signaling links to the MME/SGSN
■ In this approach the application contacts the HSS/HLR for the HSS/HLR to get the identity of the MME/SGSN that serves the user and then to forwards the notification over signaling links to the MME/SGSN

Embodiments of the present invention provide an elegant migration scenario for Device Management for data only cellular devices (e.g. M2M devices but also possibly other types of devices such as USB dongles). This removes the need to use SMS and CS domain, but does not include additional operational complexity to allow pinholing of firewalls. The additional complexity to the Device software is minimal.

In one aspect, there is provided a method for notifying a User Equipment UE (or a group of UE), over a mobile network, of an UE Application trigger request from a Network Application Server, said method comprising, in an embodiment, a step of:
- sending UE Application trigger request information using a control plane path from the Network Application Server to the UE (or to an UE of the group) via a subscriber database (such as the HLR/HSS) and a node controlling UE access to the mobile network (such as a SGSN/MME).

In an embodiment, said method comprises a step of:
- a Network Application Server that needs to trigger a connection request from a UE (or a group of UE) informing the subscriber database (such as the HLR/HSS) about this need by providing UE application trigger request information.

In an embodiment, said UE application trigger request information contains one or more of:
- the identity of the target UE;
- the identity of the application;
- a request counter associated to this request allowing to detect duplicated requests, to correlate requests with their acknowledgement and to allow the application to cancel a request;
- optionally the IP@ (or FQDN) and/or TCP (or UDP) port of the Application Server that the UE has to contact;
- optionally an urgency request indication.
- optionally application specific information.

In an embodiment, said method comprises a step of:
- the subscriber database (such as the HLR/HSS) validating the UE Application trigger request from the Network Application Server.

In an embodiment, said method comprises a step of:
- the subscriber database (such as the HLR/HSS) translating an identity of the UE (or of a group of UE) received from the Network Application Server into a mobile network identity of the UE (or of each of the UEs of the group).

In an embodiment, said method comprises a step of:
- the subscriber database (such as the HLR/HSS) storing said request in its database record associated with the UE (or with each UEs of the group).

In an embodiment, said method comprises a step of:
- the subscriber database (such as the HLR/HSS) determining the node controlling UE access to the mobile network (such as SGSN/MME) that currently serves a target UE or waiting for such a node to be allocated to the UE.

In an embodiment, said method comprises a step of:
- a gateway between the Network Application Server and the mobile network validating the request from the Network Application Server.

In an embodiment, said method comprises a step of:
- a gateway between the Network Application Server and the mobile network translating an identity of the UE (or of a group of UE) received from the Network Application Server into a mobile network identity of the UE (or of each UE of the group).

In an embodiment, said method comprises a step of:
- the subscriber database (such as the HLR/HSS) transferring UE Application trigger request information to the node controlling UE access to the mobile network (such as a SGSN/MME).

In an embodiment, said method comprises a step of:
- the subscriber database (such as the HSS/HLR) updating the node controlling UE access to the mobile network (such as a SGSN/MME) with this UE application trigger request information, immediately if the UE is already served by a node controlling UE access to the mobile network (such as a SGSN/MME) , otherwise when the UE registers to the network.

In an embodiment, said method comprises a step of:
- the subscriber database (such as the HLR/HSS) transferring UE Application trigger request information to the node controlling UE access to the mobile network (such as a SGSN/MME) within a MAP/Diameter Insert Subscriber Data request message.

In an embodiment, said method comprises a step of:
- the subscriber database (such as the HLR/HSS) erasing UE Application trigger request information in its database record associated with the UE upon getting an acknowledgement that the UE Application trigger request information has been successfully delivered to the UE.

In an embodiment, said method comprises a step of:
- the subscriber database (such as the HLR/HSS) removing the request from its database record associated with the UE upon receiving an acknowledgement from either the MME or the SGSN about the UE.

In an embodiment, said method comprises a step of:
- the node controlling UE access to the mobile network (such as a SGSN/MME) storing the request in its database record associated with the UE upon receiving the request from the subscriber database (such as HLR/HSS).

In an embodiment, said method comprises a step of:
- the node controlling UE access to the mobile network (such as a SGSN/MME) transferring UE Application trigger request information to the UE via mobile control (Non Access Stratum, NAS) signalling.

In an embodiment, said method comprises a step of:
- the node controlling UE access to the mobile network (such as a SGSN/MME) transferring UE Application trigger request information to the UE using a Location Update (such as RAU/TAU) Accept message.

In an embodiment, said method comprises a step of:
- the node controlling UE access to the mobile network (such as a SGSN/MME) transferring UE Application trigger request information to the UE using an Attach Accept message.

In an embodiment, said method comprises a step of:
- the node controlling UE access to the mobile network (such as a SGSN/MME) transferring UE Application trigger request information to the UE using a Downlink Generic Transport message.

In an embodiment, said method comprises a step of:
- the node controlling UE access to the mobile network (such as a SGSN/MME) transferring UE Application trigger request information to the UE using a GMM Information message.

In an embodiment, said method comprises a step of:
- the node controlling UE access to the mobile network (such as a SGSN/MME) transferring said request during the next NAS signalling exchange with the UE if there is no on-going signalling connection between the UE and the node, or immediately if there is an on-going signalling connection with the UE or if this is an urgent request.

In an embodiment, said method comprises:
- the node controlling UE access to the mobile network (such as a SGSN/MME) removing the request from its database record associated with the UE, upon receipt of an acknowledgement from the UE.

In an embodiment, said method comprises a step of:
- the node controlling UE access to the mobile network (such as a SGSN/MME) notifying the subscriber database (such as the HLR/HSS) that the UE has received the UE application trigger request.

In an embodiment, said method comprises a step of:
- the node controlling UE access to the mobile network (such as a SGSN/MME) notifying the subscriber database (such as the HLR/HSS) that the UE has received the UE application trigger request by sending a Diameter Notification message or a MAP Update GPRS Location message.

In an embodiment, said method comprises a step of:
- an UE receiving UE Application trigger request information transferred to said UE via NAS signalling.

In an embodiment, said method comprises a step of:
- an UE acknowledging UE Application trigger request information via NAS signalling.

In an embodiment, said method comprises a step of:
- an UE acknowledging UE Application trigger request information via location Update (such as TAU/RAU) Complete message.

In an embodiment, said method comprises a step of:
- an UE acknowledging UE Application trigger request information via Attach Complete message.

In an embodiment, said method comprises a step of:
- an UE acknowledging UE Application trigger request information via Uplink Generic Transport message.

In an embodiment, said method comprises a step of:
- an UE checking that said request is not a duplicate request.

In an embodiment, said method comprises a step of:
- an UE triggering the corresponding UE Application.

In an embodiment, said method comprises a step of:
- an UE triggering the corresponding UE Application if said request is not a duplicate request.

Other aspects relate to entities comprising means for performing such method, said entities including, in particular: Network Application Server, HLR/HSS, gateway between Network Application Server and mobile network, SGSN/MME, UE.

There is provided a Network Application Server, comprising, in an embodiment:
- means for, when needed to trigger a connection request from an UE (or from a group of UE), informing the subscriber database (such as the HLR/HSS) about this need by providing UE application trigger request information.

There is provided a subscriber database (such as the HLR/HSS), comprising, in an embodiment:
- means for transferring User Equipment UE Application trigger request information to a node controlling UE access to the mobile network (such as a SGSN/MME).

In an embodiment, the subscriber database (such as the HLR/HSS) comprises:
- means for updating the node controlling UE access to the mobile network (such as a SGSN/MME) with this UE application trigger request information, immediately if the UE is already served by a node controlling UE access to the mobile network (such as a SGSN/MME), otherwise when the UE registers to the network.

In an embodiment, the subscriber database (such as the HLR/HSS) comprises:
- means for transferring UE Application trigger request information to a node controlling UE access to the mobile network (such as a SGSN/MME) within a MAP/Diameter Insert Subscriber Data request message.

In an embodiment, the subscriber database (such as the HLR/HSS) comprises:
- means for validating the UE Application trigger request from the Network Application Server.

In an embodiment, the subscriber database (such as the HLR/HSS) comprises:
- means for translating an identity of the UE (or of a group of UE) received from the Network Application Server into a mobile network identity of the UE (or of UEs of the group).

In an embodiment, the subscriber database (such as the HLR/HSS) comprises:
- means for storing said request in its database record associated with the UE.

In an embodiment, the subscriber database (such as the HLR/HSS) comprises:
- means for determining the node controlling UE access to the mobile network (such as a SGSN/MME) that currently serves the target UE or waiting for such a node to be allocated to the UE.

In an embodiment, the subscriber database (such as the HLR/HSS) comprises:
- means for erasing the request in its database record associated with the UE upon getting an acknowledgement that the UE Application trigger request information has been successfully delivered to the UE.

In an embodiment, the subscriber database (such as the HLR/HSS) comprises:
- means for removing the request from its database record associated with the UE upon receiving an acknowledgement from either the MME or the SGSN about the UE.

There is provided a node controlling UE access to the mobile network (such as a SGSN/MME), comprising, in an embodiment:
- means for transferring UE Application trigger request information to an UE served by said node , via NAS signalling.

In an embodiment, the node controlling UE access to the mobile network (such as a SGSN/MME) comprises:
- means for transferring UE Application trigger request information to an UE served by said node, using a location Update (such as RAU/TAU) Accept message.

In an embodiment, the node controlling UE access to the mobile network (such as a SGSN/MME) comprises:
- means for transferring UE Application trigger request information to an UE served by said node , using an Attach Accept message.

In an embodiment, the node controlling UE access to the mobile network (such as a SGSN/MME) comprises:
- means for transferring UE Application trigger request information to an UE served by said node , using a Downlink Generic Transport message.

In an embodiment, the node controlling UE access to the mobile network (such as a SGSN/MME)comprises:
- means for transferring UE Application trigger request information to an UE served by said node , using a GMM Information message.

In an embodiment, the node controlling UE access to the mobile network (such as a SGSN/MME) comprises:
- means for transferring said request during the next NAS signalling exchange with the UE if there is no on-going signalling connection between the UE and the node, or immediately if there is an on-going signalling connection with the UE or if this is an urgent request.

In an embodiment, the node controlling UE access to the mobile network (such as a SGSN/MME) comprises:
- means for storing the request in its database record associated with the UE.

In an embodiment, the node controlling UE access to the mobile network (such as a SGSN/MME) comprises:
- means for removing the request from its database record associated with the UE upon receipt of an acknowledgement from the UE.

In an embodiment, the node controlling UE access to the mobile network (such as a SGSN/MME)comprises:
- means for notifying the subscriber database (such as the HLR/HSS) that the UE has received the UE Application trigger request information.

In an embodiment, the node controlling UE access to the mobile network (such as a SGSN/MME) comprises:
- means for notifying the subscriber database (such as the HLR/HSS) that the UE has received the UE Application trigger request information, using Diameter Notification message or a MAP Update GPRS Location message.

There is provided an User Equipment UE, comprising, in an embodiment:
- means for receiving UE Application trigger request information transferred to said UE via NAS signalling.

In an embodiment, the UE comprises:
- means for acknowledging UE Application trigger request information via NAS signalling.

In an embodiment, the UE comprises:
- means for acknowledging reception of UE Application trigger request information, via TAU/RAU Complete message.

In an embodiment, the UE comprises:
- means for acknowledging reception of UE Application trigger request information, via Attach Complete message.

In an embodiment, the UE comprises:
- means for acknowledging reception of UE Application trigger request information, via Uplink Generic Transport message.

In an embodiment, the UE comprises:
- means for triggering the corresponding UE Application.

In an embodiment, the UE comprises:
- means for checking that said request is not a duplicate request.

In an embodiment, the UE comprises:
- means for triggering the corresponding UE Application.

In an embodiment, the UE comprises:
- means for triggering the corresponding UE Application if said request is not a duplicate request.

In the above description:
- HLR and HSS are examples of mobile network subscriber database. HLR/HSS means HLR or HSS.
- SGSN and MME are examples of node controlling UE access to the mobile network. SGSN/MME means SGSN or MME (which does not exclude that UE Application trigger request information may possibly be sent via SGSN and MME, e.g. because both an SGSN and an MME are registered in the HLR/HSS).
   The node controlling UE access to the mobile network may be another entity than a MME or a SGSN when the mobile radio is not a 3gpp radio. For example the communication path to transfer UE Application trigger between an Application server and the UE may involve the HSS/HLR, a 3gpp AAA server, and a non 3gpp Access network such as the HRPD access. Another example is when the node controlling UE access to the mobile network is a 3gpp2 AN (Access Network)

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
HLR: Home Location Register (defined in particular in 3GPP 23.002)
HSS: Home Subscriber Server (defined in particular in 3GPP 23.002)
MME: Mobility Management Entity (defined in particular in 3GPP 23.401)
SGSN: Serving GPRS Support Nodes (defined in particular in 3GPP 23.060)
IMSI: International Mobile Subscriber Identifier (defined in particular in 3GPP 23.003)
MAP: Mobile Application Part (defined in particular in 3GPP 29.002)
RAU: Routing Area Update (defined in particular in 3GPP 23.060)
TAU: Tracking Area Update (defined in particular in 3GPP 23.401)
NAS: Non Access Stratum (defined in particular in 3GPP 24.008 and 3GPP 24.301)

## Claims

1. A method for notifying an User Equipment UE or a group of UE, over a mobile network, of an UE Application trigger request from a Network Application Server, said method comprising a step of:
- sending UE Application trigger request information using a control plane path from the Network Application Server to the UE or to an UE of the group via a subscriber database (HLR/HSS) and a node controlling UE access to the mobile network ( SGSN/MME).

2. A method according to claim 1, comprising a step of:
- a Network Application Server that needs to trigger a connection request from a UE or a group of UE informs the subscriber database (HLR/HSS) about this need by providing UE application trigger request information.

3. A method according to claim 1 or 2, wherein UE application trigger request information contains one or more of:
- the identity of the target UE;
- the identity of the application;
- a request counter associated to this request allowing to detect duplicated requests, to correlate requests with their acknowledgement and to allow the application to cancel a request;
- optionally the IP@ (or FQDN) and/or TCP (or UDP) port of the Application Server that the UE has to contact;
- optionally an urgency request indication.
- optionally application specific information.

4. A method according to any of claims 1 to 3, comprising a step of:
- the subscriber database (HLR/HSS) transferring UE Application trigger request information to the node controlling UE access to the mobile network ( SGSN/MME).

5. A method according to any of claims 1 to 4, comprising a step of:
- the subscriber database (HLR/HSS) storing UE Application trigger request information.

6. A method according to any of claims 1 to 5, comprising a step of:
- the subscriber database (HLR/HSS) erasing UE Application trigger request information upon getting an acknowledgement that it has been successfully delivered to the UE.

7. A method according to any of claims 1 to 6, comprising a step of:
- the node controlling UE access to the mobile network ( SGSN/MME) transferring UE Application trigger request information to the UE via NAS signalling.

8. A method according to any claim 1 to 7, comprising a step of:
- the node controlling UE access to the mobile network ( SGSN/MME) deciding to transfer UE Application trigger request information to the UE via NAS signalling immediately or to wait for next radio contact with the UE based on an urgency information in the UE Application trigger request.

9. A method according to any of claims 1 to 8, comprising a step of:
- UE receiving UE Application trigger request information via NAS signalling.

10. A method according to any of claims 1 to 9, comprising a step of:
- UE acknowledging reception of UE Application trigger request information, via NAS signalling.

11. A method according to any of claims 1 to 10, comprising:
- UE triggering a corresponding Application upon reception, via NAS signalling, of UE Application trigger request information.

12. A Network Application Server, comprising:
- means for, when needed to trigger a connection request from an UE or from a group of UE, informing a subscriber database (HLR/HSS) about this need by providing UE application trigger request information.

13. A mobile network subscriber database (HLR/HSS), comprising:
- means for transferring UE Application trigger request information to a node controlling UE access to the mobile network (SGSN/MME).

14. A mobile network subscriber database (HLR/HSS) according to claim 13, comprising:
- means for storing UE Application trigger request information.

15. A mobile network subscriber database (HLR/HSS) according to claim 13 or 14, comprising:
- means for erasing UE Application trigger request information upon getting an acknowledgement that it has been successfully delivered to the UE.

16. An node controlling UE access to a mobile network (SGSN/MME), comprising:
- means for transferring UE Application trigger request information to the UE, via NAS signalling.

17. An User Equipment UE, comprising:
- means for receiving UE Application trigger request information transferred to said UE via NAS signalling.

18. An UE according to claim 17, comprising:
- means for acknowledging reception of UE Application trigger request information, via NAS signalling.

19. An UE according to claim 17 or 18, comprising:
- means for triggering a corresponding Application upon reception of UE Application trigger request information.
